# EUROPEAN PATENT SPECIFICATION

(11) **EP 3 928 629 B1**
(45) Date of publication and mention of the grant of the patent: **15.11.2023**
(21) Application number: 20759351.8
(22) Date of filing: 18.02.2020
(51) Int. Cl.: A23G 3/34, A23G 3/38, A23G 3/42

(54) **COMPOSITION FOR PREPARING CANDY**
ZUSAMMENSETZUNG ZUR HERSTELLUNG VON SÜSSWAREN
COMPOSITION POUR LA PRÉPARATION DE BONBONS

(30) Priority: 19.02.2019 KR 20190019414
(43) Date of publication of application: 29.12.2021
(73) Proprietor: CJ Cheiljedang Corporation, Seoul 04560 (KR)
(72) Inventor: LIM, Joo Hee, Yongin-si, Gyeonggi-do 16863 (KR); KIM, Su Jeong, Suwon-si, Gyeonggi-do 16509 (KR); BAK, Youn Kyung, Suwon-si, Gyeonggi-do 16698 (KR); BYUN, Sung Bae, Sejong 30083 (KR)
(74) Representative: Mummery, Thomas Zack
(86) International application number: PCT/KR2020/002342
(87) International publication number: WO 2020/171560

(56) References cited:
- WO-A1-2017/144485
- JP-A- 2009 142 187
- KR-A- 20130 020 412
- KR-A- 20130 020 412
- KR-A- 20160 089 551
- KR-A- 20160 143 076
- US-A1- 2013 309 382
- US-B1- 6 780 990

## Description

### TECHNICAL FIELD

The present invention relates to a composition for preparing a candy.

### BACKGROUND ART

Candy is a generic term for sweets made from sugar, starch syrup, and the like, and there are various types such as hard candies, jellies, caramels, sweet red bean jelly, and the like. Candies are prepared by mixing saccharides, such as sugar and starch syrup, or sugar alcohols, as main raw materials. Candies are prepared by concentrating the main raw materials through a heating process, adding minor materials such as organic acids to form in a certain shape, and cooling. Candies are prepared by basically using a sugar solution containing saccharides making a sweet taste.

Sugar or starch syrup used in the preparation of hard candies that have a hard texture and show a certain shape after being manufactured, among the candies, is also used as a sweetener making a sweet taste and affects the physical properties of the final hard candies. Therefore, sugar or starch syrup has been used as the main material of hard candies. In addition, the hard candies made from sugar may have a drawback due to the recrystallization of sugar. To compensate for the drawback, methods for preparing a candy by adding a large amount of starch syrup have been used. However, recent consumers who value health recognize starch syrup as a raw material that has a negative effect on health. Therefore, there is a need for a method of preparing a candy by using other saccharides that replace starch syrup to meet the needs of consumers.

Since hard candies are made through forming and cooling processes to form a specific shape, they should maintain their original shapes without being deformed during distribution. However, the hard candies can easily melt when exposed to high temperature or high humidity conditions during the distribution process. In this case, the melted hard candy may stick to the inner side of the wrapping paper that wraps the surface of the hard candy or may stick to other candies packaged together. Therefore, when a consumer opens the wrapping paper of the hard candy, he may feel discomfort due to the stickiness of the surface of the candy while separating the candy from the wrapping paper by hand, and difficulties may occur in the process of ingestion.

In addition, the hard candy has hygroscopicity, and when exposed to air, it absorbs moisture to increase its weight, and the cold flow phenomenon may occur according to this characteristic. Cold flow is a phenomenon in which a change in shape occurs even under low-temperature conditions such as room temperature even if conditions such as high temperature are not given. The hard candy also absorbs moisture in the air at room temperature so that the overall shape thereof may be different from the original shape of the finished product. Therefore, even if the hard candy is initially prepared in a form that is easy to pick up and consume by hand, difficulty in ingestion may occur due to the cold flow phenomenon, and ingestion may become impossible.

To solve drawbacks, such as stickiness of the candy surface or occurrence of the cold flow phenomenon, attempts have been made to replace the raw materials, such as starch syrup or sugar, that contain monosaccharides or disaccharides as main components, with sugar alcohols. However, there have been no studies or reports on the degree of polymerization (DP) values of polysaccharides, the composition ratio according to the degree of polymerization, and the average molecular weight, to effectively improve stickiness and the cold flow phenomenon.

Therefore, it is necessary to improve the stickiness of the candy surface due to melting, which may occur during the distribution process, and the candy shape deformation due to the cold flow phenomenon and develop a candy that is easier for consumers to consume, maintains sweetness, and is good for consumer health.

US2013309382 relates to a hard candy including bulking sweetener agents and doctoring agents that give acceptable clarity, cold flow and stickiness formation stability, while being less cariogenic than traditional sucrose and corn syrup hard candy and while not causing gastrointestinal disturbances.

KR20130020412 relates to a starch syrup for candy, a composition for preparing candy, and a candy.

WO201714485 relates to confectionery products and more specifically pertains to a method of preparation of chewy candy.

### DISCLOSURE OF THE INVENTION

### TECHNICAL PROBLEM

An object of the present invention is to provide a composition for preparing a candy for reducing the stickiness of the candy surface and improving the cold flow phenomenon compared to conventional candies containing starch syrup.

In addition, another object of the present invention is to provide a candy having improved surface stickiness and/or the cold flow phenomenon, the candy prepared from the composition for preparing a candy described above.

Still another aspect of the present invention is to provide a method for preparing a candy having improved surface stickiness and/or the cold flow phenomenon.

### TECHNICAL SOLUTION

According to an aspect of the present invention, there is provided a composition for preparing a candy, the composition containing: saccharides having a degree of polymerization of 2 or less; and saccharides having a degree of polymerization of 3 or more; wherein the saccharides having a degree of polymerization of 2 or less include allulose; wherein the composition has a content of the saccharides having a degree of polymerization of 3 or more of 29 parts by weight or more, based on 100 parts by weight of the saccharides having a degree of polymerization of 2 or less, based on dry solids; and wherein the composition has an allulose content of 5 to 10 parts by weight, based on 100 parts by weight of the saccharides having a degree of polymerization of 2 or less, based on dry solids.

According to another aspect of the present invention, there is provided a candy prepared from the composition for preparing a candy.

According to still another aspect of the present invention, there is provided a method for preparing a candy, the method comprising: a step for heating and concentrating the composition for preparing a candy; and a step for forming and cooling a concentrated result.

### ADVANTAGEOUS EFFECTS

The composition for preparing a candy provided in the present invention can improve the stickiness of the candy surface that may occur during the preparation and distribution processes of the candy, thereby reducing the phenomenon in which the candy sticks to the inner surface of the wrapping paper or adheres to other adjacent candies during the distribution process. Accordingly, there is an effect of improving the unpleasant and uncomfortable touch that may occur due to the stickiness when a consumer removes the wrapping paper and comes into contact with the candy to ingest.

In addition, the composition for preparing a candy of the present invention can improve the cold flow phenomenon in which the shape changes even under low-temperature conditions as the candy absorbs moisture in the air. Therefore, it is possible to reduce the phenomenon in which the candy melts and the shape changes in the distribution process despite room temperature conditions. In addition, it is possible to prepare a candy that can be provided in a form that allows the consumer to consume the candy in the form of an initially produced candy and thus is easy to pick up by hand and eat.

Furthermore, the candy contains allulose, which is a rare sugar and produces low calories, and thus has a similar sugar content to those containing other types of saccharides such as sugar but has reduced calories, so is better for consumers' health, and meets the taste of recent consumers who prefer low-calorie products.

However, the effects of the present invention are not limited to the above-mentioned effects and other effects not mentioned will be clearly understood from the following description by a person skilled in the art.

### BRIEF DESCRIPTION OF THE DRAWINGS

FIG. 1A is a graph obtained by measuring and comparing the forces required to detach a probe in contact with the surface of the melted candy to determine the surface stickiness of candies of Preparation Examples 1-1 and 1-2, and Comparative Example 1.
FIG. 1B shows the result obtained by taking pictures of initial candies and candies after exposure to the condition of 90% humidity and 50°C for 3 hours and making a comparison to determine the cold flow phenomenon of candies of Preparation Examples 1-1 and 1-2, and Comparative Example 1.
FIG. 1C is a graph obtained by measuring the weight increase amount of candies after exposure to the condition of 90% humidity and 50°C every 1 hour, 2 hours, and 3 hours and comparing the results to determine the cold flow phenomenon of candies of Preparation Examples 1-1 and 1-2, and Comparative Example 1.
FIG. 2A is a graph obtained by measuring and comparing the forces required to detach a probe in contact with the surface of the melted candy to determine the surface stickiness of candies of Preparation Examples 2-1 to 2-4, and Comparative Example 2.
FIG. 2B shows the result obtained by taking pictures of initial candies and candies after exposure to the condition of 90% humidity and 50°C for 3 hours and making a comparison to determine the cold flow phenomenon of candies of Preparation Examples 2-1 to 2-4, and Comparative Example 2.
FIG. 2C is a graph obtained by measuring the weight increase amount of candies after exposure to the condition of 90% humidity and 50°C every 1 hour, 2 hours, and 3 hours and comparing the results to determine the cold flow phenomenon of candies of Preparation Examples 2-1 to 2-4, and Comparative Example 2.

### MODE FOR CARRYING OUT THE INVENTION

Hereinafter, the present invention will be described in more detail.

The composition for preparing a candy of the present invention contains saccharides having a degree of polymerization of 2 or less and saccharides having a degree of polymerization of 3 or more. The saccharides having a degree of polymerization of 2 or less include allulose. In addition, the composition for preparing a candy has a content of the saccharides having a degree of polymerization of 3 or more of 29 parts by weight or more, based on 100 parts by weight of the saccharides having a degree of polymerization of 2 or less, based on dry solids. The composition has an allulose content of 5 to 10 parts by weight, based on 100 parts by weight of the saccharides having a degree of polymerization of 2 or less, based on dry solids.

The term "degree of polymerization (DP)" in the present invention refers to the number of monomer units contained in the chain of a polymer. In the saccharides of the present invention, the degree of polymerization refers to the number of monosaccharides contained in the saccharides. For example, the saccharides having a degree of polymerization of 2 or less refer to saccharides having the degree of polymerization of 1 and/or the degree of polymerization of 2 and thus may be saccharides consisting of one monosaccharide or saccharides in which two monosaccharides are bonded.

The saccharides having a degree of polymerization of 2 or less includes monosaccharides and/or disaccharides. For example, the monosaccharide may be a hexose, and the disaccharide may be one in which two monosaccharide molecules are bonded by a glycosidic bond. The disaccharide in which monosaccharides are bonded may be one in which the same types of monosaccharides are bonded, or a combination of different types of monosaccharides is bonded.

The monosaccharide of the saccharides having a degree of polymerization of 2 or less may include glucose, fructose, galactose, or a combination thereof. The disaccharide may be maltose, isomaltose, sugar, lactose, or a combination thereof.

In addition, the saccharides having a degree of polymerization of 2 or less include allulose. The saccharides having a degree of polymerization of 2 or less have an allulose content of 5 to 10 parts by weight based on 100 parts by weight of the saccharides having a degree of polymerization of 2 or less. For example, the saccharides having a degree of polymerization of 2 or less may have an allulose content of 5 parts by weight or more, 5.2 parts by weight or more, 5.5 parts by weight or more, 5.7 parts by weight or more, 6 parts by weight or more, 6.2 parts by weight or more, 6.5 parts by weight or more, 6.7 parts by weight or more, 7 parts by weight or more, 7.2 parts by weight or more, 7.5 parts by weight or more, 7.7 parts by weight or more, 8 parts by weight or more, 8.2 parts by weight or more, 8.5 parts by weight or more, 8.7 parts by weight or more, 9 parts by weight or more, 9.2 parts by weight or more, 9.5 parts by weight or more, 9.7 parts by weight or more, or 10 parts by weight or more, and/or 10 parts by weight or less, 9.7 parts by weight or less, 9.5 parts by weight or less, 9.2 parts by weight or less, 9 parts by weight or less, 8.7 parts by weight or less, 8.5 parts by weight or less, 8.2 parts by weight or less, 8 parts by weight or less, 7.7 parts by weight or less, 7.5 parts by weight or less, 7.3 parts by weight or less, 7 parts by weight or less, 6.7 parts by weight or less, 6.5 parts by weight or less, 6.2 parts by weight or less, 6 parts by weight or less, 5.7 parts by weight or less, 5.5 parts by weight or less, 5.2 parts by weight or less, or 5 parts by weight or less, based on 100 parts by weight of the saccharides having a degree of polymerization of 2 or less.

The allulose may refer to D-allulose or L-allulose and is a kind of rare sugar called psicose and a monosaccharide having sweetness of 70% relative to sugar. Unlike fructose or sugar, it is not metabolized in the human body, so it is characterized by low calories. The allulose contained in the composition for preparing a candy of the present invention is combined with the saccharides having a degree of polymerization of 3 or more as described above to improve the surface stickiness of the hard candy and the cold flow phenomenon. It also has low calories but can maintain sweetness similar to sugar, thus allowing a low-calorie candy production. In addition, it has an anti-cariogenic effect and thus reduces the possibility of caries due to candy consumption.

The allulose may be extracted from natural products, chemically synthesized, or synthesized by biological methods with allulose epimerase. For example, the allulose may be one prepared by reacting a composition for preparing allulose with a raw material containing fructose, the composition for preparing allulose comprising at least one selected from the group consisting of the allulose epimerase enzyme, a cell of a strain producing the enzyme, a culture of the strain, a lysate of the strain, and an extract of the lysate or culture. The allulose may be included in a liquid syrup form having a purity of 95% or higher. The Brix of the allulose may be 70 to 75, 71 to 74, or 71 to 73. The sweetness based on dry solids may be 0.45 to 0.65, 0.5 to 0.6, or 0.55 to 0.6. The calories of the allulose may be 0.05 to 0.15 kcal, 0.05 to 0.125 kcal, or 0.075 to 0.125 kcal. One kilocalorie (kcal) equals 4.184 kJ or 4184 joules (J).

The saccharides having a degree of polymerization of 2 or less may further include a sugar alcohol. The sugar alcohol may be selected from among, but is not limited to, maltitol, xylitol, erythritol, sorbitol, mannitol, polyglycitol, lactitol, and a combination thereof. The maltitol is a sugar alcohol having the degree of polymerization of 2 and is classified as a polyol. The maltitol replaces sugar during the preparation of candy to reduce calories and has a cariostatic effect. The maltitol may be included in a maltitol syrup form. The Brix of the maltitol syrup may be 65 to 75, for example, 67 to 73, or 70 to 73. The Sweetness of the maltitol syrup may be 0.6 to 0.8, based on solids, for example 0.65 to 0.75, or 0.67 to 0.72. The calories of the maltitol syrup may be 2 to 4 kcal, for example 2.5 to 3.7 kcal, or 2.7 to 3.5 kcal.

The saccharides having a degree of polymerization of 2 or less may be included in a content of 70 to 85 parts by weight, based on a total of 100 parts by weight of the composition for preparing a candy of the present invention. For example, the saccharides having a degree of polymerization of 2 or less may be included in a content of 70 parts by weight or more, 72 parts by weight or more, 75 parts by weight or more, 77 parts by weight or more, 80 parts by weight or more, 82 parts by weight or more, or 85 parts by weight or more, and/or, 85 parts by weight or less, 82 parts by weight or less, 80 parts by weight or less, 77 parts by weight or less, 75 parts by weight or less, 72 parts by weight or less, or 70 parts by weight or less, based on a total of 100 parts by weight of the composition for preparing a candy of the present invention.

The saccharide having a degree of polymerization of 3 or more is a kind of a relatively short saccharide in which three to dozens of monosaccharides are bonded by a glycosidic bond. For example, it may be one in which 3 to 15, 3 to 10, 3 to 9, 3 to 8, or 3 to 7 monosaccharides are bonded. The monosaccharide which is bonded as described above may be the same type, or different kinds of monosaccharides may be combined. For example, the saccharides having a degree of polymerization of 3 or more may be isomaltooligosaccharides, fructooligosaccharides, galactooligosaccharides, xylooligosaccharides, chitooligosaccharides, cellooligosaccharides, soy oligosaccharides, and the like.

The saccharides having a degree of polymerization of 3 or more are included in a content of 29 to 50 parts by weight based on 100 parts by weight of the saccharides having a degree of polymerization of 2 or less, based on dry solids. For example, the saccharides having a degree of polymerization of 3 or more may be included in a content of 29 parts by weight or more, 30 parts by weight or more, 32 parts by weight or more, 35 parts by weight or more, 37 parts by weight or more, 40 parts by weight or more, 42 parts by weight or more, 45 parts by weight or more, 47 parts by weight or more, or 50 parts by weight or more, and/or, 50 parts by weight or less, 47 parts by weight or less, 45 parts by weight or less, 42 parts by weight or less, 40 parts by weight or less, 37 parts by weight or less, 35 parts by weight or less, 32 parts by weight or less, 30 parts by weight or less, or 29 parts by weight or less, based on 100 parts by weight of the saccharides having a degree of polymerization of 2 or less, based on dry solids.

In addition, the saccharides having a degree of polymerization of 3 or more may be included in a content of 23 to 35 parts by weight, based on a total of 100 parts by weight of the composition for preparing a candy, based on dry solids. For example, the saccharides having a degree of polymerization of 3 or more may be included in a content of 23 parts by weight or more, 25 parts by weight or more, 27 parts by weight or more, 30 parts by weight or more, 32 parts by weight or more, or 35 parts by weight or more, and/or 35 parts by weight or less, 32 parts by weight or less, 30 parts by weight or less, 27 parts by weight or less, 25 parts by weight or less, or 23 parts by weight or less, based on a total of 100 parts by weight of the composition for preparing a candy, based on dry solids.

The saccharides having a degree of polymerization of 3 or more can serve to reduce the phenomenon in which the surface of the hard candy prepared from the composition for preparing a candy of the present invention melts and becomes sticky and reduce the moisture amount absorbed by the candy to improve the cold flow phenomenon.

A mixture of the saccharides having a degree of polymerization of 2 or less and the saccharides having a degree of polymerization of 3 or more may be included in a syrup form. The Brix of the syrup may be 65 to 80, for example, 67 to 78, 69 to 75, or 70 to 73. The sweetness of the syrup may be 0.1 to 0.9, based on solids, for example, 0.2 to 0.8, 0.3 to 0.7, or 0.4 to 0.6. The calories of the syrup may be 2.5 to 7 kcal, when concentrated, for example, 2.8 to 6.5 kcal, 3 to 6 kcal, or 3.5 to 5 kcal.

Furthermore, the composition for preparing a candy of the present invention may further include at least one selected from the group consisting of: green tea, black tea, coffee, cocoa, herb, and ginseng; extracts of green tea, black tea, coffee, cocoa, herb, and ginseng; and flavoring, to give tastes and colors in consideration of consumer preference. The composition may further include at least one additive selected from the group consisting of minor raw materials such as dairy products, fruit juices, salt, and vegetable fats, acidulants, flavoring, and colorants.

The weight average molecular weight of the composition for preparing a candy of the present invention may be 29,000 g/mol to 45,000 g/mol, for example, 29,000 g/mol or more, 30,000 g/mol or more, 32,000 g/mol or more, 35,000 g/mol or more, 37,000 g/mol or more, 40,000 g/mol or more, 42,000 g/mol or more, or 45,000 g/mol or more, and/or 45,000 g/mol or less, 42,000 g/mol or less, 40,000 g/mol or less, 37,000 g/mol or less, 35,000 g/mol or less, 32,000 g/mol or less, 30,000 g/mol or less, or 29,000 g/mol or less. The larger the average molecular weight, the greater the effect of improving the stickiness and cold flow of the candy prepared from the composition for preparing a candy of the present invention.

In particular, allulose, which is included in the composition at 5 to 10 parts by weight, based on 100 parts by weight of the saccharides having a degree of polymerization of 2 or less, based on dry solids and the saccharides having a degree of polymerization of 3 or more contained in the composition, can reduce the surface stickiness phenomenon and hygroscopicity in the candy prepared from the composition, thereby improving the cold flow phenomenon. The effect of improving the surface stickiness and cold flow as described above may result from the saccharides having a degree of polymerization of 2 or less, allulose which is included with an allulose content of 5 to 10 parts by weight, based on 100 parts by weight of the saccharides having a degree of polymerization of 2 or less, based on dry solids, and the saccharides having a degree of polymerization of 3 or more, used in the preparation process of the candy of the present invention, and the organic combination thereof. The effect of improving the surface stickiness and cold flow of the candy may increase as the ratio of the saccharides having a degree of polymerization of 3 or more increases, the ratio of the saccharides having a degree of polymerization of 2 or less decreases, and/or thus, the average molecular weight of the entire composition increases.

Another aspect of the present invention provides a candy prepared from the composition for preparing a candy as described above.

The candy may include crystalline candy and amorphous candy. The crystalline candy may include fondant, fudge, divinity, and nougat, and the amorphous candy may include a hard candy, caramel, taffy, toffee, marshmallows, or brittles. The candy of the present invention may be a hard candy.

The candy, as described above, may have improved surface stickiness and cold flow phenomenon.

The surface stickiness of the candy refers to a property of sticking to other objects due to its sticky surface and may result from the sugar solution formed by melting of the surface of the candy. The stickiness can be quantified by bringing a probe into contact with the surface of the melted candy for a period of time and measuring the force required to detach the probe again. That the force required to detach the probe is high means that the degree of stickiness is high, as the sugar solution of the melted candy has a high content of saccharides. The "improvement of the surface stickiness of the candy" refers to reducing the surface stickiness of the candy. For example, it may be reducing the force required when the probe is brought into contact with the candy surface and then detached again. When the candy of the present invention was exposed to the condition of 90% humidity and 50°C for 10 minutes and analyzed using Texture Analyzer, the force required when the probe is brought into contact with the candy surface and then detached again may be 750 g (g force) or less. For example, the measured force may be 720 g or less, 700 g or less, 670 g or less, 650 g or less, 620 g or less, 600 g or less, 570 g or less, 550 g or less, 520 g or less, or 500 g or less. In addition, the surface stickiness of the candy of the present invention may be improved by 2% to 35%, compared to the result of measuring that of a candy prepared from a composition including less than 29 parts by weight of the saccharides having a degree of polymerization of 3 or more, based on 100 parts by weight of the saccharides having a degree of polymerization of 2 or less. For example, the surface stickiness of the candy of the present invention may be improved by 2% or more, 5% or more, 7% or more, 100 or more, 12% or more, 15% or more, 17% or more, 20% or more, 22% or more, 25% or more, 27% or more, 30% or more, 32% or more, or 35% or more improvement, and/or 35% or less, 32% or less, 30% or less, 27% or less, 25% or less, 22% or less, 20% or less, 17% or less, 15% or less, 12% or less, 10% or less, 7% or less, 5% or less, or 2% or less.

In addition, the cold flow phenomenon refers to a phenomenon in which the candy absorbs moisture at room temperature to change its shape, and it can be confirmed whether the cold flow phenomenon is improved by measuring the hygroscopicity of the candy. When the candy weight before and after the measurement increased more, it means that the candy absorbed more moisture. The "improvement of the cold flow phenomenon" refers to reducing the cold flow phenomenon. For example, it may refer to reducing the hygroscopicity of the candy or that when the change in the weight of the candy is measured in the presence of moisture in the air, the weight increase amount is relatively small. The candy of the present invention may have a weight increase amount of 9.5% or less due to moisture absorption of the candy, as measured after exposure to the condition of 90% humidity and 50°C for 10 minutes. For example, the weight increase amount may be 9.4% or less, 9.2% or less, 9% or less, 8.7% or less, 8.5% or less, 8.2% or less, or 8% or less. In addition, the cold flow phenomenon of the candy of the present invention may be improved by 2% to 18%, compared to the result of measuring that of a candy prepared from a composition including less than 29 parts by weight of the saccharides having a degree of polymerization of 3 or more, based on 100 parts by weight of the saccharides having a degree of polymerization of 2 or less. For example, it may be improved by 2% or more, 5% or more, 7% or more, 100 or more, 12% or more, 15% or more, or 18% or more, and/or 18% or less, 15% or less, 12% or less, 10% or less, 7% or less, 5% or less, or 2% or less.

Furthermore, the candy of the present invention prepared from the composition in which the saccharides having a degree of polymerization of 2 or less include allulose with an allulose content of 5 to 10 parts by weight, based on 100 parts by weight of the saccharides having a degree of polymerization of 2 or less, based on dry solids, may have improved surface stickiness or cold flow phenomenon, compared to a candy prepared from a composition including the same amount of fructose instead of allulose. Specifically, the surface stickiness of the candy may be improved by 2% to 21%, for example, 2% or more, 5% or more, 7% or more, 10% or more, 12% or more, 15% or more, 17% or more, 20% or more, or 21% or more, and/or 21% or less, 20% or less, 17% or less, 15% or less, 12% or less, 10% or less, 7% or less, 5% or less, or 2% or less. In addition, the cold flow phenomenon may be improved by 4% to 10%, such as 4% or more, 5% or more, 6% or more, 7% or more, 8% or more, 9% or more, or 10% or more, and/or 10% or less, 9% or less, 8% or less, 7% or less, 6% or less, 5% or less, or 4% or less. Methods for improving and measuring the surface stickiness and cold flow phenomenon of the candy are the same as described above.

Another aspect of the present invention provides a method for improving the surface stickiness phenomenon of a candy and/or a method for improving the cold flow phenomenon of a candy.

The method for improving the surface stickiness phenomenon of a candy and/or the method for improving the cold flow phenomenon of a candy include(s) a step for heating and concentrating a composition containing saccharides having a degree of polymerization of 2 or less and saccharides having a degree of polymerization of 3 or more; and a step for forming and cooling a concentrated result and the composition has a content of the saccharides having a degree of polymerization of 3 or more of 29 parts by weight or more, based on 100 parts by weight of the saccharides having a degree of polymerization of 2 or less, based on dry solids.

The description of the composition is as described above in the description of "composition for preparing a candy". For example, the descriptions of the saccharides having a degree of polymerization of 2 or less, the saccharides having a degree of polymerization of 3 or more, allulose, contents, ratios thereof, the weight average molecular weight of the composition, and the like are as described above. In addition, the descriptions of the candy, the improvement of the surface stickiness phenomenon, the improvement of the cold flow phenomenon, and the like are as described above.

Still another aspect of the present invention provides a use of a composition for improving the surface stickiness of a candy and/or a use of a composition for improving the cold flow phenomenon of a candy. The candy is prepared from the composition. The composition contains saccharides having a degree of polymerization of 2 or less and saccharides having a degree of polymerization of 3 or more, and has a content of the saccharides having a degree of polymerization of 3 or more of 29 parts by weight or more, based on 100 parts by weight of the saccharides having a degree of polymerization of 2 or less, based on dry solids.

The description of the composition is as described above in the description of "composition for preparing a candy". For example, the descriptions of the saccharides having a degree of polymerization of 2 or less, the saccharides having a degree of polymerization of 3 or more, allulose, contents, ratios thereof, the weight average molecular weight of the composition, and the like are as described above. In addition, the descriptions of the candy, the improvement of the surface stickiness phenomenon, the improvement of the cold flow phenomenon, and the like are as described above.

Another aspect of the present invention provides a method for preparing a candy.

The method for preparing a candy of the present invention includes: a step for heating and concentrating the composition for preparing a candy as described above; and a step for forming and cooling a concentrated result.

The descriptions of the saccharides having a degree of polymerization of 2 or less and the saccharides having a degree of polymerization of 3 or more are as described above.

The step for heating and concentrating the composition for preparing a candy may involve a process for mixing the saccharides having a degree of polymerization of 2 or less and the saccharides having a degree of polymerization of 3 or more in sequence and stirring to completely dissolve the same. The stirring rate may be, but is not limited to, about 200 to 400 rpm. The step for heating and concentrating the mixture includes, without limitation, heating at 140 to 150°C. It may be performing a process for stirring the saccharides and a process for heating at the same time.

In the step for forming and cooling a concentrated result, the concentrated result may be introduced into a forming molder and subjected to a solidification process. It may be allowed to stand at room temperature condition for a sufficient time to be cooled. There is no limitation on the material of the forming mold. However, metal, glass, ceramic, synthetic resin, or a mixture thereof can be mass-produced and thus are suitable for use. In addition, the forming mold may be in a coated form to enhance the releasability of the candy. The metal may be iron or aluminum. The synthetic resin may be in the form of plastic or fluoroplastic. The plastic may in particular be heat-resistant plastic such as polypropylene. The shape of the molder may be selected according to the shape of the candy to be prepared. A round, triangular, square, pentagonal, or hexagonal molder may be used, but the present invention is not limited thereto.

The method for preparing a candy of the present invention may further include a step for adding an additive. The step for adding an additive may be included in a process before heating in the step for heating and concentrating the composition for preparing a candy. The description of the additive is as described above.

Hereinafter, the present invention will be described in detail through Examples.

However, the following Examples specifically illustrate the present invention, and the contents of the present invention are not limited by the following Examples.

### [Preparation Examples]

### Preparation of hard candies

### <Preparation Examples 1-1 and 1-2>

This example is not part of the present invention.

To prepare a hard candy by using a composition for preparing a candy, the composition containing saccharides having a degree of polymerization of 2 or less and saccharides having a degree of polymerization of 3 or more, ingredients were mixed in the composition and contents as described in Table 1 below. Each of the raw materials were weighed in accurate amounts with a scale (Mettler Toledo ML4002) in a beaker that can be heated. Before heating the weighed raw materials, the liquid type raw materials and the powder type raw materials were mixed while stirring at 200 rpm with a homogenizer (EYELA MAZELA Z, Eyela, Japan) and a probe having a diameter of 5 cm and three wings. The mixture was directly heated to a temperature of 140°C to 150°C with a heating mantle (MSH-20A, WiseStir) and stirred at 350 rpm with the same homogenizer and probe as described above. When the temperature of the sugar solution reached 150°C, heating was stopped. The sugar solution, which was heated and concentrated as described above, was dispensed into a round candy molder and cooled at room temperature for a sufficient time to prepare hard candies of Preparation Examples 1-1 and 1-2, respectively.

1) 72 Brix isomaltooligosaccharide sugar solution (CJ CheilJedang Corp.) having a content of saccharides having a degree of polymerization of 3 to 7 of 63 wt% based on total saccharides and a content of saccharides having a degree of polymerization of 2 or less of 37 wt% based on total saccharides and 2) 72 Brix low sweetening starch syrup sugar solution (CJ CheilJedang Corp.) having a content of saccharides having a degree of polymerization of 3 to 7 of 88 wt% based on total saccharides and a content of saccharides having a degree of polymerization of 2 or less of 12 wt% based on total saccharides were used as the saccharides having a degree of polymerization of 2 or less and the saccharides having a degree of polymerization of 3 or more. White sugar (purity: 99% or more) from CJ CheilJedang Corp. and maltitol syrup (72 Brix, the degree of polymerization of 2 or less in saccharides: 99 wt% or more) from Samyang Corp. were used.

### Comparative Example 1

This example is not part of the present invention.

Basically, a candy was prepared in the same manner and with the same ingredients as in Preparation Example 1-1, but the candy of Comparative Example 1 was prepared with slightly different ingredients and contents.

More specifically, Comparative Example 1 was prepared by not using low sweetening starch syrup and using 40 wt% of isomaltooligosaccharide sugar solution based on a total of 100 wt% of the composition.

**[Table 1]**

| Ingredients | | Preparatio n Example 1-1* | Preparatio n Example 1-2* | Comparativ e example 1 |
|---|---|---|---|---|
| Oligosa ccharid es | Isomaltooligosacch arides | 20 | | 40 |
| | Low sweetening starch syrup (CJ CheilJedang Corp.) | 20 | 40 | |
| White sugar | | 37 | 37 | 37 |
| Maltitol | | 23 | 23 | 23 |
| Total (wt%) | | 100 | 100 | 100 |
| Solids content (wt%) | | 82.35 | 82.23 | 82.47 |
| Average molecular weight (based on solids) | | 35664.948 | 42404.364 | 28925.532 |
| The proportion of DP 1,2 (based on a total of 100 parts by weight of saccharides) | | 74 | 69 | 78 |
| The proportion of DP ≥ 3 (based on a total of 100 parts by weight of saccharides) | | 26 | 31 | 22 |
| The proportion of DP 3 to DP 1,2 | | 35.1 | 44.9 | 28.2 |

| | | | | |
|---|---|---|---|---|
| * comparative preparation examples | | | | |

### <Preparation Examples 2-1 to 2-4>

To determine the effect of the composition for preparing a candy, containing allulose, basically, a candy was prepared in the same manner as in Preparation Example 1-1, but the candy was prepared by including allulose among saccharides having a degree of polymerization of 2 or less with the composition and contents as described in Table 2 below.

The sugar solution products used are the same as the products used in Preparation Example 1-1. For the allulose syrup, 72 Brix syrup having a purity of 95% or more (CJ Cheiljedang) was used.

### <Comparative Example 2>

Basically, a candy was prepared in the same manner and with the same ingredients as in Preparation Example 2-3, but the candy of Comparative Example 2 was prepared with slightly different ingredients and contents.

More specifically, comparative example 2 was prepared by using 5 wt% of fructose sugar solution, instead of allulose syrup, based on a total of 100 wt% of the composition.

**[Table 2]**

| Ingredients | | Prepara tion Example 2-1 | Prepara tion Example 2-2 | Prepara tion Example 2-3 | Prepara tion Example 2-4 | Compara tive example 2 |
|---|---|---|---|---|---|---|
| Oligo sacch aride s | Isomaltooli gosaccharid es | 35 | 25 | 20 | 5 | 20 |
| | Low sweetening starch syrup (CJ CheilJedang Corp. ) | 5 | 15 | 20 | 35 | 20 |
| White sugar | | 37 | 37 | 37 | 37 | 37 |
| Maltitol | | 18 | 18 | 18 | 18 | 18 |
| Allulose | | 5 | 5 | 5 | 5 | |
| Fructose | | | | | | 5 |
| Total (wt%) | | 100 | 100 | 100 | 100 | 100 |
| Solids content (wt%) | | 82.42 | 82.36 | 82.33 | 82.24 | 82.48 |
| Average molecular weight (based on solids) | 29953.5 66 | 33323.2 74 | 35008.1 28 | 40062.6 9 | 35035.1 28 | |
| The proportion of DP 1,2 (based on a total of 100 parts by weight of saccharides) | 77 | 75 | 74 | 71 | 74 | |
| The proportion of DP ≥ 3 (based on a total of 100 parts by weight of saccharides) | 23 | 25 | 26 | 29 | 26 | |
| The proportion of DP 3 to DP 1,2 | 30.0 | 33.7 | 35.7 | 41.8 | 35.6 | |

Each ingredient used in Preparation Examples and Comparative Example has properties as shown in Table 3 below.

**[Table 3]**

| Ingredients | | Brix | DP (Degree of polymeriz ation) | Ingredi ent content (%) | Ingredi ent content (%, based on solids) | Averag e molecu lar weight |
|---|---|---|---|---|---|---|
| Oligos acchar ides | Isomaltooli gosaccharid es | 72 | DP1, 2 | 37 | 26.6 | 240.1 |
| | | | DP3-7 | 63 | 45.4 | |
| | Low sweetening starch syrup (CJ CheilJedang Corp.) | 71.4 | DP1, 2 | 12 | 8.6 | 577.1 |
| | | | DP≥3 | 88 | 62.8 | |
| Allulose | | 72 | DP1 | 100 | 72.0 | 129.6 |
| Maltitol | | 72.5 | DP1, 2 | 100 | 72.5 | 261.0 |
| High fructose | | 75 | DP1 | 100 | 75.0 | 135.0 |

**[Experimental Example 1]**

This example is not part of the present invention.

### Determination of the effect of improving the stickiness and cold flow of the hard candy having an increased content of the saccharides having a degree of polymerization of 3 or more

### 1-1. Determination of the effect of improving the candy surface stickiness

This example is not part of the present invention.

The degree of surface stickiness was determined for Preparation Examples 1-1 and 1-2 and Comparative Example 1 prepared by the method and mixing ratio as described above. To determine how much the candy has melted for a certain time, the texture analyzer was used. The probe was brought into contact with the candy's surface, and then how much force was required to detach the probe again was measured to determine the surface stickiness of the candy.

First, to maintain constant temperature and humidity, the condition of a thermo-hygrostat was set to 50° C and RH 90%, and the candies of each Preparation Example and Comparative Example that were placed on a dish were put in a desiccator and exposed for 10 minutes so that only the surfaces of the candies were allowed to melt. In the process of moving the candy of each of Preparation Examples and Comparative Example to the desiccator, it should not take a long time to measure. The force required to detach the probe again was measured by setting pre-test speed, test speed, post-test speed, applied force, trigger force, and contact time between the probe and the candy surface to be 1.0 mm/sec, 1.0 mm/sec, 8.0 mm/sec, 8.0 g, 3.0 g, and 5.0 sec, respectively.

As a result, as shown in Table 4 below, the forces required to detach the probe from the surface of the candy were measured to be 696.9 g (g force) for the candy of Preparation Example 1-1 and 723.4 g for the candy of Preparation Example 1-2. Thus, it was found that the forces decreased compared to 765.5 g for the candy of Comparative Example 1. Judging from the above results, Preparation Examples 1-1 and 1-2, which were prepared by increasing the ratio of low sweetening starch syrup sugar solution having a higher content of saccharides having a degree of polymerization of 3 or more, had improved surface stickiness phenomenon, compared to Comparative Example 1 having a higher content of saccharides having a degree of polymerization of 2 or less. Thus, it was found that the forces required to detach the probe from the candy surface decreased.

**[Table 4]**

| Samples | Preparation Example 1-1 | Preparation Example 1-2 | Comparative example 1 |
|---|---|---|---|
| Surface stickiness (g force) | 696.9 | 723.4 | 765.5 |

### 1-2. Determination of the effect of improving cold flow phenomenon of the candy

This example is not part of the present invention.

In addition to the determination of the effect of improving the stickiness of the present invention as described above, the effect of improving the cold flow phenomenon was determined for Preparation Examples 1-1 and 1-2 and Comparative Example 1. By measuring the weight increase amount of the candy, the hygroscopicity of the candy was determined, and whether the cold flow phenomenon due to this was improved was determined.

First, to maintain constant temperature and humidity, the condition of a thermo-hygrostat was set to 50° C and RH 90%, and the dishes and the candies of each Preparation Example and Comparative Example were weighed and recorded. The candies of Preparation Examples and Comparative Examples were exposed to the thermo-hygrostat set under the above condition for 1 hour, 2 hours, and 3 hours. The candies were taken out each time to measure the weights to determine the weight change. Three hours is the maximum time for which the candy cannot maintain shape retention. The initial state and the state after 3 hours of the candy were photographed at the experiment.

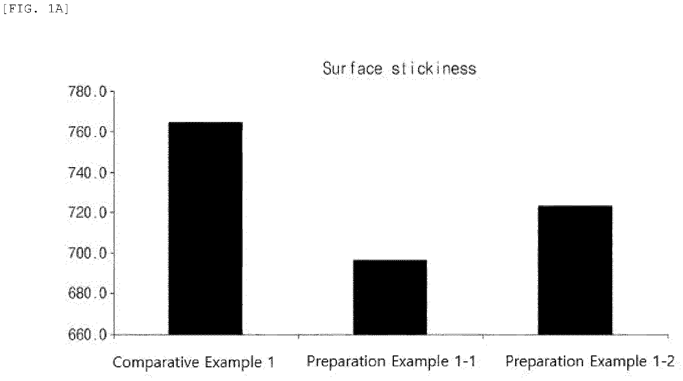

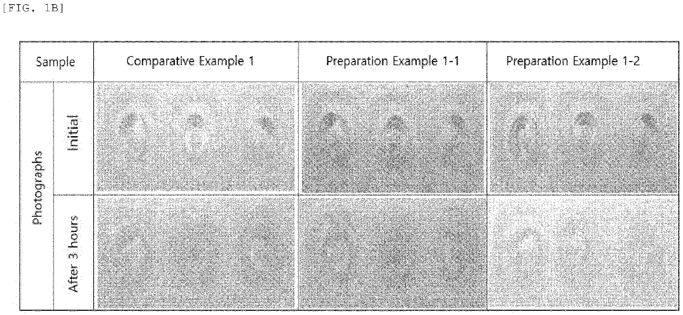

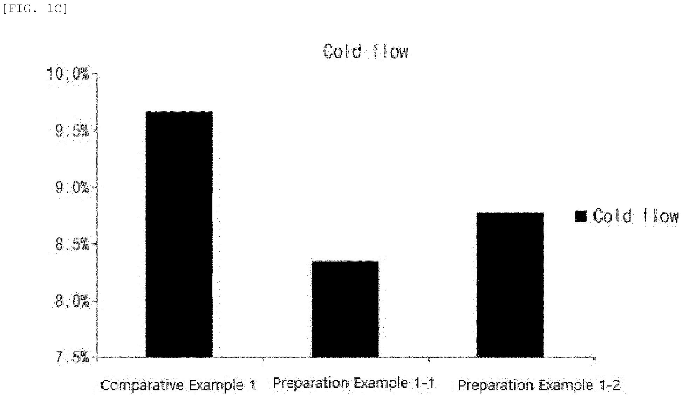

As a result, as shown in Table 5 below, the weight increase amount over time of the candy of Preparation Example 1-1 was measured to be 3.3% after 1 hour, 5.9% after 2 hours, and 8.3% after 3 hours. The weight increase amount over time of the candy of Preparation Example 1-2 was measured to be 3.2% after 1 hour, 6.0% after 2 hours, and 8.8% after 3 hours. Thus, it was found that those decreased compared to 3.5% after 1 hour, 6.6% after 2 hours, and 9.7% after 3 hours of the candy of Comparative Example 1. In addition, as a result of visually observing how much the candies have melted, it was found that the candy of Comparative Example 1 melted more after three hours than the candies of Preparation Examples 1-1 and 1-2 (see FIG. 1A) .

Judging from the above results, in Preparation Examples 1-1 and 1-2, which were prepared by increasing the ratio of low sweetening starch syrup sugar solution having a higher content of saccharides having a degree of polymerization of 3 or more, the amount of moisture absorbed by the candy decreased, and the weight increase amount decreased compared to Comparative Example 1 having a higher content of saccharides having a degree of polymerization of 2 or less. Thus, the cold flow phenomenon was found to be improved.

**[Table 5]**

| Samples | | Preparation Example 1-1 | Preparation Example 1-2 | Comparative example 1 |
|---|---|---|---|---|
| Weight increase amount | 1H | 3.3% | 3.2% | 3.5% |
| | 2H | 5.9% | 6.0% | 6.6% |
| | 3H | 8.3% | 8.8% | 9.7% |

### [Experimental Example 2]

### Determination of the effect of improving the stickiness and cold flow phenomenon of the candy containing allulose and determination of optimal saccharide ratio

### 1-1. Determination of the effect of improving the candy surface stickiness

The degree of surface stickiness was determined for Preparation Examples 2-1 to 2-4 and Comparative Example 2 prepared by the method and mixing ratio as described above. The surface stickiness of the candy was measured in the same manner as in Experimental Example 1.

As a result, as shown in Table 6 below, it was found that the forces required to detach the probe from the surface of the candy were measured to be 1020.6 g (g force) for the candy of Preparation Example 2-1, 865.4 g for the candy of Preparation Example 2-2, 595.6 g for the candy of Preparation Example 2-3, 734.7 g for the candy of Preparation Example 2-4, and 749.0 g for the candy of Comparative Example 2.

From the above results, it was found that compared to Comparative Example 2 in which fructose was used, using the same amount of allulose as in Preparation Example 2-3 could prepare the candy having more improved stickiness.

**[Table 6]**

| Samples | Prepara tion Example 2-1 | Prepara tion Example 2-2 | Prepara tion Example 2-3 | Prepara tion Example 2-4 | Compara tive example 2 |
|---|---|---|---|---|---|
| Surface stickiness | 1020.6 | 865.4 | 595.6 | 734.7 | 749.0 |

### 1-2. Determination of the effect of improving cold flow phenomenon of the candy

In addition to the determination of the effect of improving the stickiness of the present invention as described above, the effect of improving the cold flow phenomenon was determined for Preparation Examples 2-1 to 2-4 and Comparative Example 2. The cold flow phenomenon of the candy was measured in the same manner as in Experimental Example 1.

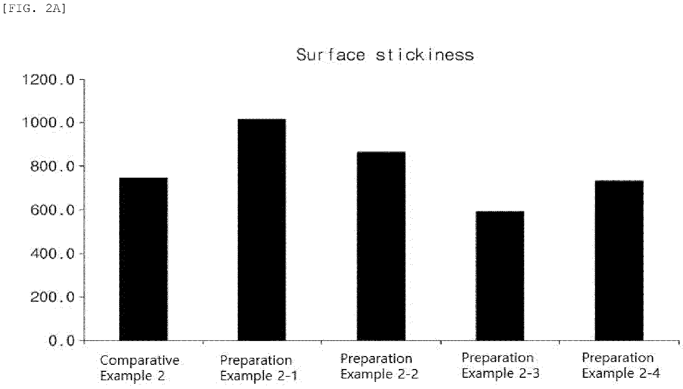

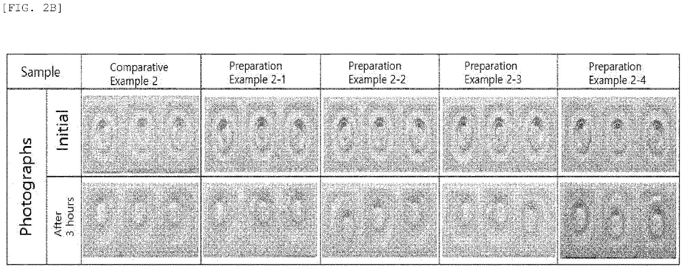

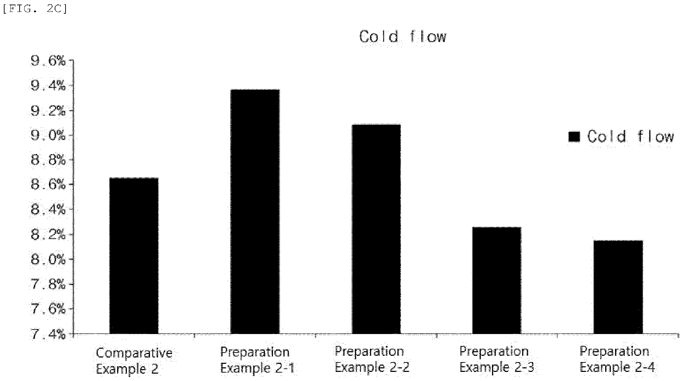

As a result, as shown in Table 7 below, it was found that: the weight increase amount over time of the candy of Preparation Example 2-1 was measured to be 3.5% after 1 hour, 6.5% after 2 hours, and 9.4% after 3 hours; the weight increase amount over time of the candy of Preparation Example 2-2 was measured to be 3.1% after 1 hour, 6.4% after 2 hours, and 9.1% after 3 hours; the weight increase amount over time of the candy of Preparation Example 2-3 was measured to be 2.9% after 1 hour, 5.7% after 2 hours, and 8.3% after 3 hours; the weight increase amount over time of the candy of Preparation Example 2-4 was measured to be 3.0% after 1 hour, 5.4% after 2 hours, and 8.2% after 3 hours; and the weight increase amount over time of the candy of Comparative Example 2 was measured to be 3.2% after 1 hour, 6.0% after 2 hours, and 8.7% after 3 hours. In addition, as a result of visually observing how much the candies have melted, it was found that: the candy of Comparative Example 2 melted more after three hours than the candies of Preparation Examples 2-3 and 2-4; and the candies of Preparation Example 2-1 and 2-2 melted more than the candy of Comparative Example 2 (see FIG. 2A).

From the above results, it was found that compared to Comparative Example 2 in which fructose was used, using the same amount of allulose as in Preparation Example 2-3 could prepare the candy having more improved cold flow.

**[Table 7]**

| Samples | | Preparation Example 2-1 | Preparation Example 2-2 | Preparation Example 2-3 | Preparation Example 2-4 | Comparative example 2 |
|---|---|---|---|---|---|---|
| Weight increase amount | 1H | 3.5% | 3.1% | 2.9% | 3.0% | 3.2% |
| | 2H | 6.5% | 6.4% | 5.7% | 5.4% | 6.0% |
| | 3H | 9.4% | 9.1% | 8.3% | 8.2% | 8.7% |

## Claims

1. A composition for preparing a candy, the composition containing: saccharides having a degree of polymerization of 2 or less; and saccharides having a degree of polymerization of 3 or more;
wherein the saccharides having a degree of polymerization of 2 or less include allulose;
wherein the composition has a content of the saccharides having a degree of polymerization of 3 or more of 29 parts by weight or more, based on 100 parts by weight of the saccharides having a degree of polymerization of 2 or less, based on dry solids; and
wherein the composition has an allulose content of 5 to 10 parts by weight, based on 100 parts by weight of the saccharides having a degree of polymerization of 2 or less, based on dry solids.

2. The composition for preparing a candy of claim 1, wherein the saccharides having a degree of polymerization of 3 or more include at least one selected from the group consisting of isomaltooligosaccharides, fructooligosaccharides, galactooligosaccharides, xylooligosaccharides, chitooligosaccharides, cellooligosaccharides, and soy oligosaccharides.

3. The composition for preparing a candy of claim 1, having a content of the saccharides having a degree of polymerization of 2 or less of 70 to 85 parts by weight, based on a total of 100 parts by weight of the composition for preparing a candy, based on dry solids.

4. The composition for preparing a candy of claim 1, having a content of the saccharides having a degree of polymerization of 3 or more of 29 to 50 parts by weight, based on 100 parts by weight of the saccharides having a degree of polymerization of 2 or less, based on dry solids.

5. The composition for preparing a candy of claim 1, having a content of the saccharides having a degree of polymerization of 3 or more of 23 to 35 parts by weight, based on a total of 100 parts by weight of the composition for preparing a candy, based on dry solids.

6. The composition for preparing a candy of claim 1, wherein an average molecular weight of the entire composition for preparing a candy is 29,000 to 45,000 g/mol.

7. A candy prepared from the composition for preparing a candy of any one of claims 1 to 6.

8. The candy of claim 7, which is a hard candy.

9. The candy of claim 8, wherein a weight increase amount after exposing the candy to 90% humidity and 50°C for 3 hours is 9.5% or less.

10. A method for preparing a candy, comprising: a step for heating and concentrating the composition of any one of claims 1 to 6; and a step for forming and cooling a concentrated result.

11. The method for preparing a candy of claim 10, wherein the step for heating and concentrating the composition is carried out at 140°C to 150°C.

## Patentansprüche

1. Zusammensetzung zur Herstellung einer Süßware, wobei die Zusammensetzung Folgendes aufweist: Saccharide mit einem Polymerisationsgrad von 2 oder weniger; und Saccharide mit einem Polymerisationsgrad von 3 oder mehr;
wobei die Saccharide mit einem Polymerisationsgrad von 2 oder weniger Allulose beinhalten;
wobei die Zusammensetzung einen Gehalt der Saccharide mit einem Polymerisationsgrad von 3 oder mehr von 29 Gewichtsteilen oder mehr, bezogen auf 100 Gewichtsteile der Saccharide mit einem Polymerisationsgrad von 2 oder weniger, bezogen auf die Trockensubstanz, aufweist; und
wobei die Zusammensetzung einen Allulosegehalt von 5 bis 10 Gewichtsteilen, bezogen auf 100 Gewichtsteile der Saccharide mit einem Polymerisationsgrad von 2 oder weniger, bezogen auf die Trockensubstanz, aufweist.

2. Zusammensetzung zur Herstellung einer Süßware nach Anspruch 1, wobei die Saccharide mit einem Polymerisationsgrad von 3 oder mehr wenigstens eines aufweisen, das aus der Gruppe bestehend aus Isomaltooligosacchariden, Fructooligosacchariden, Galactooligosacchariden, Xylooligosacchariden, Chitooligosacchariden, Cellooligosacchariden und Soja-Oligosacchariden ausgewählt ist.

3. Zusammensetzung zur Herstellung einer Süßware nach Anspruch 1, die einen Gehalt der Saccharide mit einem Polymerisationsgrad von 2 oder weniger von 70 bis 85 Gewichtsteilen hat, bezogen auf insgesamt 100 Gewichtsteile der Zusammensetzung zur Herstellung einer Süßware, bezogen auf die Trockensubstanz.

4. Zusammensetzung zur Herstellung einer Süßware nach Anspruch 1, die einen Gehalt der Saccharide mit einem Polymerisationsgrad von 3 oder mehr von 29 bis 50 Gewichtsteilen hat, bezogen auf 100 Gewichtsteile der Saccharide mit einem Polymerisationsgrad von 2 oder weniger, bezogen auf die Trockensubstanz.

5. Zusammensetzung zur Herstellung einer Süßware nach Anspruch 1, die einen Gehalt der Saccharide mit einem Polymerisationsgrad von 3 oder mehr von 23 bis 35 Gewichtsteilen hat, bezogen auf insgesamt 100 Gewichtsteile der Zusammensetzung zur Herstellung einer Süßware, bezogen auf die Trockensubstanz.

6. Zusammensetzung zur Herstellung einer Süßware nach Anspruch 1, wobei die durchschnittliche molare Masse der gesamten Zusammensetzung zur Herstellung einer Süßware 29.000 bis 45.000 g/mol beträgt.

7. Süßware, hergestellt aus der Zusammensetzung zur Herstellung einer Süßware nach einem der Ansprüche 1 bis 6.

8. Süßware nach Anspruch 7, die ein Hartbonbon ist.

9. Süßware nach Anspruch 8, wobei die Gewichtszunahme, nachdem die Süßware für 3 Stunden einer Feuchtigkeit von 90 % und 50 °C ausgesetzt wurde, 9,5 % oder weniger beträgt.

10. Verfahren zur Herstellung einer Süßware, das Folgendes aufweist: einen Schritt zum Erhitzen und Konzentrieren der Zusammensetzung nach einem der Ansprüche 1 bis 6; und einen Schritt zum Formen und Abkühlen eines konzentrierten Ergebnisses.

11. Verfahren zur Herstellung einer Süßware nach Anspruch 10, wobei der Schritt zum Erhitzen und Konzentrieren der Zusammensetzung bei 140 °C bis 150 °C durchgeführt wird.

## Revendications

1. Composition de préparation d'un bonbon, la composition contenant : des saccharides ayant un degré de polymérisation de 2 ou moins ; et des saccharides ayant un degré de polymérisation de 3 ou plus ;
dans laquelle les saccharides ayant un degré de polymérisation de 2 ou moins comprennent de l'allulose ;
où la composition a une teneur en saccharides ayant un degré de polymérisation de 3 ou plus de 29 parties en poids ou plus, sur la base de 100 parties en poids des saccharides ayant un degré de polymérisation de 2 ou moins, sur une base de solides secs ; et
où la composition a une teneur en allulose de 5 à 10 parties en poids, sur la base de 100 parties en poids des saccharides ayant un degré de polymérisation de 2 ou moins, sur une base de solides secs.

2. Composition de préparation d'un bonbon selon la revendication 1, dans laquelle les saccharides ayant un degré de polymérisation de 3 ou plus en comprennent au moins un sélectionné parmi le groupe composé d'isomalto-oligosaccharides, de fructooligosaccharides, de galacto-oligosaccharides, de xylo-oligosaccharides, de chitooligosaccharides, de cello-oligosaccharides et d'oligosaccharides de soja.

3. Composition de préparation d'un bonbon selon la revendication 1, ayant une teneur en saccharides ayant un degré de polymérisation de 2 ou moins de 70 à 85 parties en poids, sur la base d'un total de 100 parties en poids de la composition de préparation d'un bonbon, sur une base de solides secs.

4. Composition de préparation d'un bonbon selon la revendication 1, ayant une teneur en saccharides ayant un degré de polymérisation de 3 ou plus de 29 à 50 parties en poids, sur la base de 100 parties en poids des saccharides ayant un degré de polymérisation de 2 ou moins, sur une base de solides secs.

5. Composition de préparation d'un bonbon selon la revendication 1, ayant une teneur en saccharides ayant un degré de polymérisation de 3 ou plus de 23 à 35 parties en poids, sur la base d'un total de 100 parties en poids de la composition de préparation d'un bonbon, sur une base de solides secs.

6. Composition de préparation d'un bonbon selon la revendication 1, dans laquelle une masse moléculaire moyenne de la composition entière de préparation d'un bonbon est de 29.000 à 45.000 g/mol.

7. Bonbon préparé avec la composition de préparation d'un bonbon selon l'une quelconque des revendications 1 à 6.

8. Bonbon selon la revendication 7, qui est un bonbon dur.

9. Bonbon selon la revendication 8, dans lequel un degré d'augmentation de poids suite à l'exposition du bonbon à 90 % d'humidité et 50 °C pendant 3 heures est de 9,5 % ou moins.

10. Procédé de préparation d'un bonbon comprenant une étape consistant à chauffer et concentrer la composition selon l'une quelconque des revendications 1 à 6 ; et une étape consistant à former et refroidir un résultat concentré.

11. Procédé de préparation d'un bonbon selon la revendication 10, dans lequel l'étape de chauffage et concentration de la composition est effectuée entre de 140 °C à 150 °C.
